# EUROPEAN PATENT APPLICATION

(11) **EP 4 809 875 A1**
(43) Date of publication of application: **23.09.2026**
(21) Application number: 26154281.5
(22) Date of filing: 27.01.2026
(51) Int. Cl.: A47J 31/06, A47J 31/18, A47J 31/00, A47J 31/20, A47J 31/52

(54) **AN AUTOMATED TEA BREWING AND DISPENSING DEVICE AND METHOD THEREOF**

(30) Priority: 18.03.2025 EP 25164503
(71) Applicant: TeehandWerk UG (haftungsbeschränkt), 60313 Frankfurt a. M. (DE)
(72) Inventor: KÖRNER, Nina, 60313 Frankfurt am Main (DE); SAUERBREI, Sven, 60313 Frankfurt am Main (DE)
(74) Representative: Meyer-Dulheuer MD Legal Patentanwälte PartG mbB

(57) **Abstract**

An automated tea brewing and dispensing device and method thereof, comprising an outer container unit (102) configured to hold liquid and enclose internal components, a brewing and dispensing unit (104) detachably mounted on the outer container unit (102), the brewing and dispensing unit (104) comprising a brewing chamber unit (106), positioned within the brewing and dispensing unit (104), a timer mechanism unit (108), operably coupled to the brewing chamber unit (106), a valve-controlled passage (110), allowing selective liquid flow regulation between the outer container unit (102) and the drinking outlet unit (112), a drinking outlet unit (112), positioned at the top of the brewing and dispensing unit (104), the drinking outlet unit (112) including a closure mechanism to selectively open and close the passage for dispensing brewed tea.

## Description

### TECHNICAL FIELD

The present disclosure generally relates to beverage preparation devices and methods. More specifically, the disclosure pertains to an automated tea brewing and dispensing device and method thereof that facilitates efficient tea preparation while ensuring precise control over infusion strength and dispensing.

### Background Art

The automated tea brewing and dispensing device provides a hassle-free brewing experience, allowing users to prepare tea without the need for constant monitoring or manual intervention. The built-in mechanism ensures consistent brewing, eliminating the guesswork associated with steeping time and temperature control. This is especially useful for individuals with busy schedules who cannot afford to wait and supervise the brewing process. The system minimizes the chances of over-steeping or under-extraction, ensuring the perfect cup every time. Additionally, the seamless operation reduces stress and effort in daily tea preparation.

The device enhances user convenience by combining brewing and dispensing into a single compact unit. Users can prepare tea efficiently without requiring additional tools or equipment, making it ideal for home, office, or travel use. The system's design also reduces mess and spillage. Unlike traditional setups that involve multiple steps, this device simplifies the process, making it easy even for first-time users. The portability of the system allows tea lovers to enjoy their favorite beverages anywhere without the inconvenience of handling multiple brewing accessories. Additionally, its user-friendly operation ensures accessibility for people of all age groups.

The invention allows customization of tea strength based on user preference. Unlike traditional methods that rely on estimation, the adjustable brewing time and infusion control ensure precise flavor extraction, catering to individual taste preferences without requiring additional steps. Whether a person prefers a light, mild infusion or a strong, bold flavor, the system accommodates varying preferences effortlessly. The customization option makes it ideal for households with multiple users who have different brewing preferences. This flexibility eliminates the need for repeated trial and error, providing a consistent tea experience every time.

The device maintains beverage temperature for extended periods, ensuring that tea remains warm and fresh. Unlike conventional methods where tea cools down quickly, the insulated structure provides prolonged heat retention, allowing users to enjoy their tea at the desired temperature without the need for reheating. This feature is particularly beneficial for individuals who take time to finish their beverage, as it prevents unnecessary reheating cycles that can alter the tea's taste. The ability to keep tea warm makes it an excellent option for gatherings or professional settings where people may not consume their beverage immediately. Additionally, it helps conserve energy by reducing the need for repeated heating.

Many existing tea brewing devices lack automation, requiring users to manually monitor steeping time and remove tea bags or leaves to prevent over-extraction and user inconvenience. This leads to inconsistent taste and inconvenience, especially in busy environments where continuous attention is impractical. Users often have to set alarms or reminders to prevent their tea from becoming too strong or too weak. This manual intervention makes the process tedious and unsuitable for those who need a quick and effortless brewing experience. Additionally, improper timing often results in wasted tea or unsatisfactory flavor.

Some tea dispensers do not have precise control over infusion strength, resulting in variable tea strength. Users often need to experiment with different methods to achieve the desired taste, which can be time-consuming and frustrating. The lack of an adjustable brewing mechanism means that tea drinkers have limited control over their beverage's strength. This issue is especially problematic in settings where multiple people have different preferences, leading to inconsistent results. Many users end up wasting tea by repeatedly making new batches to achieve the correct taste.

Traditional brewing systems do not effectively prevent spills or drips, leading to potential mess and waste. In many cases, tea leaks from poorly designed spouts or outlets, making cleanup difficult and reducing overall user satisfaction. Accidental spills not only create inconvenience but also increase the risk of stains on surfaces and clothing. The lack of a secure dispensing mechanism results in wasted tea, making the process inefficient. Additionally, some systems require extra effort to clean, discouraging regular use and making the entire experience less enjoyable.

Many conventional tea-making devices do not retain heat efficiently, causing the tea to cool down quickly. This forces users to frequently reheat their beverage, which not only alters the flavor but also increases energy consumption, making the process less convenient and efficient. A lack of proper insulation leads to temperature fluctuations, which can negatively affect the taste and overall tea-drinking experience. People who enjoy their tea over an extended period often find themselves reheating their drink multiple times, leading to unnecessary delays. This issue becomes even more frustrating in colder environments, where beverages cool down much faster than desired.

Thus, in light of the above-stated discussion, there is an urgent need for a technical solution that overcomes the above-stated limitations, specifically an automated tea brewing and dispensing device and method thereof that provides controlled steeping, prevents over-extraction, ensures spill-free dispensing, and maintains optimal beverage temperature.

### SUMMARY OF THE DISCLOSURE

The following is a summary description of illustrative embodiments of the invention. It is provided as a preface to assist those skilled in the art to more rapidly assimilate the detailed design discussion which ensues, and is not intended in any way to limit the scope of the claims which are appended hereto in order to particularly point out the invention.

According to illustrative embodiments, the present disclosure provides an automated tea brewing and dispensing devices and methods that address the above challenges. The device ensures precise control over tea steeping duration and customized infusion strength through a mechanical timer mechanism and adjustable infusion settings.

According to the first aspect of the present disclosure, an automated tea brewing and dispensing device is disclosed. The device comprises an outer container unit configured to hold liquid, enclose internal components and incorporate a thermal insulation layer to maintain the temperature of the liquid. The device comprising a brewing and dispensing unit detachable mounted on the outer container unit which integrates: a brewing chamber unit, positioned within the brewing and dispensing unit, the brewing chamber unit configured to receive tea leaves or tea bags and selectively submerge them into the liquid, a timer mechanism unit, operably coupled to the brewing chamber unit, the timer mechanism unit configured to control the submersion duration and automatically lift the brewing chamber unit upon completion of the steeping process, a valve-controlled passage, allowing selective liquid flow regulation between the outer container unit and the drinking outlet unit, a drinking outlet unit, positioned at the top of the brewing and dispensing unit, the drinking outlet unit including a closure mechanism to selectively open and close the passage for dispensing brewed tea.

In one embodiment of the present invention, the brewing chamber unit is a perforated strainer unit, facilitating controlled infusion while preventing tea leaves from escaping into the liquid.

In one embodiment of the present invention, the brewing chamber unit is connected to the timer mechanism unit through a mechanical lifting assembly unit, allowing automated retraction of the brewing chamber unit after the predefined brewing time.

In one embodiment of the present invention, the timer mechanism unit comprises a mechanical wind-up system unit, enabling precise steeping duration control without requiring an external power source.

In one embodiment of the present invention, the timer mechanism unit includes an adjustable dial, allowing users to select a brewing duration between 1 and 30 minutes.

In one embodiment of the present invention, the timer mechanism unit incorporates an L-shaped guide unit, ensuring proper alignment and secure engagement of the rotary locking mechanism.

In one embodiment of the present invention, the timer mechanism unit further includes a spring-loaded lifting assembly, configured to retract the brewing chamber unit upon completion of the steeping process.

In one embodiment of the present invention, the drinking outlet unit comprises an anti-drip mechanism, preventing leakage when the device is tilted or transported.

In an embodiment of the present invention, the brewing and dispensing unit further includes an overflow chamber, configured to collect excess liquid when the brewing chamber unit is retracted.

In an embodiment of the present invention, the outer container unit comprises a heat retention layer, ensuring consistent brewing temperature throughout the steeping process.

In one embodiment of the present invention, the brewing chamber unit is designed with an angled bottom surface, ensuring full submersion for uniform steeping.

In one embodiment of the present invention, the brewing chamber unit includes an internal divider unit, allowing simultaneous steeping of multiple tea types without cross-contamination.

In accordance with an embodiment of the present invention, the brewing and dispensing unit includes a secondary venting channel, preventing pressure buildup when hot liquid is being dispensed.

According to the second aspect of the present disclosure, the brewing and dispensing unit comprises a quick-detach locking system, allowing seamless removal and cleaning of internal components.

In an embodiment of the present invention, the brewing and dispensing unit comprises a dual-layer insulating structure, reducing external surface temperature and enhancing user safety.

In an embodiment of the present invention, the brewing chamber unit includes a rotatable infusion control plate unit, allowing users to manually adjust the strength of the tea infusion.

According to the third aspect of the present disclosure, the automated tea brewing and dispensing method includes introducing liquid into an outer container unit, wherein the outer container unit provides thermal insulation to maintain optimal brewing temperature, placing tea leaves or tea bags into a brewing chamber unit, wherein the brewing chamber unit is positioned within a brewing and dispensing unit and is configured to selectively submerge into the liquid for infusion, activating a timer mechanism unit, wherein the timer mechanism unit controls the steeping duration by engaging a mechanical lifting assembly unit, allowing precise timing of tea infusion, submerging the brewing chamber unit into the liquid, wherein the timer mechanism unit retains the brewing chamber unit in the submerged position for a predefined steeping duration, lifting the brewing chamber unit upon completion of the steeping process, wherein the timer mechanism unit engages a spring-loaded lifting assembly unit to retract the brewing chamber unit, ensuring accurate infusion and preventing over-steeping, dispensing brewed tea through a drinking outlet unit, wherein the drinking outlet unit comprises an anti-drip mechanism unit, preventing leakage while allowing controlled pouring, regulating the steeping process using a valve-controlled passage unit, wherein the valve-controlled passage unit manages liquid flow between the brewing chamber unit and the outer container unit, preventing premature dilution or overflow, ensuring user control over tea strength using a rotatable infusion control plate unit, wherein the rotatable infusion control plate unit adjusts the degree of tea exposure to liquid, allowing customization of flavor intensity, monitoring and adjusting the temperature within the outer container unit, wherein a heat retention layer maintains consistent thermal conditions to optimize tea extraction.

In an embodiment of the present invention, the brewing chamber unit is configured to undergo a multi-stage submersion process, allowing incremental exposure of tea leaves to liquid at different intervals to customize infusion strength.

In one embodiment of the present invention, the timer mechanism unit comprises a variable-release mechanism, enabling a controlled delay in lifting the brewing chamber unit, providing users with the option to extend brewing time dynamically.

In one embodiment of the present invention, the brewing chamber unit has an angled bottom surface, ensuring full submersion for uniform steeping.

In one embodiment of the present invention, the brewing chamber unit includes an internal divider unit, allowing simultaneous steeping of multiple tea types without cross-contamination.

In one embodiment of the present invention, the brewing and dispensing unit includes a secondary venting channel, preventing pressure buildup when dispensing hot liquid.

These and other advantages will be apparent from the present application of the embodiments described herein.

The preceding is a simplified summary to provide an understanding of some embodiments of the present invention. This summary is neither an extensive nor exhaustive overview of the present invention and its various embodiments. The summary presents selected concepts of the embodiments of the present invention in a simplified form as an introduction to the more detailed description presented below. As will be appreciated, other embodiments of the present invention are possible utilizing, alone or in combination, one or more of the features set forth above or described in detail below.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
FIG. 1 illustrates a block diagram of an automated tea brewing and dispensing device and method thereof, according to embodiments of the present invention.
FIG. 2 illustrates a flowchart of an automated tea brewing and dispensing device, according to embodiments of the present invention disclosed herein.
FIG. 3 illustrates a flowchart of an automated tea brewing and dispensing method, according to embodiments of the present invention disclosed herein.
FIG. 4A-4D illustrate different views of the automated tea brewing and dispensing device, according to embodiments of the present invention disclosed herein.

The automated tea brewing and dispensing device and method thereof is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features referred to or indicated in this specification, individually or collectively, and any and all combinations of any or more of such steps or features.

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

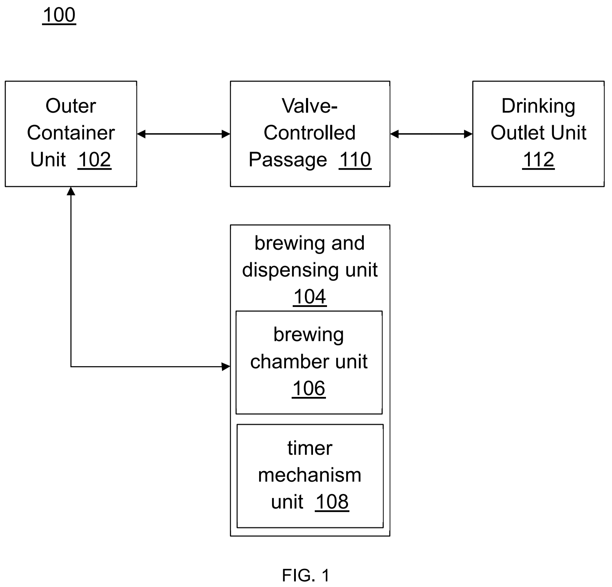

FIG. 1 illustrates a block diagram of an automated tea brewing and dispensing device and method thereof 100, according to embodiments of the present invention. The device 100 comprises an outer container unit 102 configured to hold liquid and enclose internal components, the outer container unit 102 comprising a thermal insulation layer to maintain the temperature of the liquid. The device 100 includes a brewing and dispensing unit 104 detachable mounted on the outer container unit 102, the brewing and dispensing unit 104 comprising; a brewing chamber unit 106, positioned within the brewing and dispensing unit 104, the brewing chamber unit 106 configured to receive tea leaves or tea bags and selectively submerge them into the liquid, a timer mechanism unit 108, operably coupled to the brewing chamber unit 106, the timer mechanism unit 108 configured to control the submersion duration and automatically lift the brewing chamber unit 106 upon completion of the steeping process. The device 100 also includes a valve-controlled passage 110, allowing selective liquid flow regulation between the outer container unit 102 and the drinking outlet unit 112. The device 100 also includes a drinking outlet unit 112, positioned at the top of the brewing and dispensing unit 104, the drinking outlet unit 112 including a closure mechanism to selectively open and close the passage for dispensing brewed tea.

The brewing chamber unit 106 is a perforated strainer unit, facilitating controlled infusion while preventing tea leaves from escaping into the liquid.

The brewing chamber unit 106 is connected to the timer mechanism unit 108 through a mechanical lifting assembly unit, allowing automated retraction of the brewing chamber unit 106 after the predefined brewing time.

The timer mechanism unit 108 comprises a mechanical wind-up system unit, enabling precise steeping duration control without requiring an external power source.

The timer mechanism unit 108 includes an adjustable dial, allowing users to select a brewing duration between 1 and 30 minutes.

The timer mechanism unit 108 incorporates an L-shaped guide unit, ensuring proper alignment and secure engagement of the rotary locking mechanism.

The timer mechanism unit 108 further includes a spring-loaded lifting assembly, configured to retract the brewing chamber unit 106 upon completion of the steeping process.

The drinking outlet unit 112 comprises an anti-drip mechanism, preventing leakage when the device is tilted or transported.

The brewing and dispensing unit 104 further includes an overflow chamber, configured to collect excess liquid when the brewing chamber unit 106 is retracted.

The outer container unit 102 comprises a heat retention layer, ensuring consistent brewing temperature throughout the steeping process.

The brewing chamber unit 106 is designed with an angled bottom surface, ensuring full submersion for uniform steeping.

The brewing chamber unit 106 includes an internal divider unit, allowing simultaneous steeping of multiple tea types without cross-contamination.

The brewing and dispensing unit 104 includes a secondary venting channel, preventing pressure buildup when hot liquid is being dispensed.

The brewing and dispensing unit 104 comprises a quick-detach locking system, allowing seamless removal and cleaning of internal components.

The brewing and dispensing unit 104 comprises a dual-layer insulating structure, reducing external surface temperature and enhancing user safety.

The brewing chamber unit 106 includes a rotatable infusion control plate unit, allowing users to manually adjust the strength of the tea infusion.

The method 100 comprises introducing liquid into an outer container unit 102, wherein the outer container unit 102 provides thermal insulation to maintain optimal brewing temperature. The method 100 may include placing tea leaves or tea bags into a brewing chamber unit 106, wherein the brewing chamber unit 106 is positioned within a brewing and dispensing unit 104 and is configured to selectively submerge into the liquid for infusion. The method 100 may also include activating a timer mechanism unit 108, wherein the timer mechanism unit 108 controls the steeping duration by engaging a mechanical lifting assembly unit, allowing precise timing of tea infusion. The method 100 may also include submerging the brewing chamber unit 106 into the liquid, wherein the timer mechanism unit 108 retains the brewing chamber unit 106 in the submerged position for a predefined steeping duration. The method 100 may also include lifting the brewing chamber unit 106 upon completion of the steeping process, wherein the timer mechanism unit 108 engages a spring-loaded lifting assembly unit to retract the brewing chamber unit 106, ensuring accurate infusion and preventing over-steeping. The method 100 may also include dispensing brewed tea through a drinking outlet unit 112, wherein the drinking outlet unit 112 comprises an anti-drip mechanism unit, preventing leakage while allowing controlled pouring. The method 100 may also include regulating the steeping process using a valve-controlled passage 110, wherein the valve-controlled passage 110 manages liquid flow between the brewing chamber unit 106 and the outer container unit 102, preventing premature dilution or overflow. The method 100 may also include ensuring user control over tea strength using a rotatable infusion control plate unit, wherein the rotatable infusion control plate unit adjusts the degree of tea exposure to liquid, allowing customization of flavor intensity. The method 100 may also include monitoring and adjusting the temperature within the outer container unit 102, wherein a heat retention layer maintains consistent thermal conditions to optimize tea extraction.

The brewing chamber unit 106 is configured to undergo a multi-stage submersion process, allowing incremental exposure of tea leaves to liquid at different intervals to customize infusion strength.

The timer mechanism unit 108 comprises a variable-release mechanism, enabling a controlled delay in lifting the brewing chamber unit 106, providing users with the option to extend brewing time dynamically.

The brewing chamber unit 106 has an angled bottom surface, ensuring full submersion for uniform steeping.

The brewing chamber unit 106 includes an internal divider unit, allowing simultaneous steeping of multiple tea types without cross-contamination.

The brewing and dispensing unit 104 includes a secondary venting channel, preventing pressure buildup when dispensing hot liquid.

The outer container unit 102 is forming the primary structural body of the automated tea brewing and dispensing device, enclosing the internal components while providing thermal insulation layer to maintain the temperature of the liquid for prolonged brewing. The outer container unit 102 is receiving liquid introduced by the user, ensuring an optimal environment for the brewing process. The outer container unit 102 is incorporating a heat retention layer positioned around the inner chamber, ensuring consistent brewing conditions, specifically brewing temperature throughout the steeping process. The outer container unit 102 is interacting with the brewing and dispensing unit 104, providing a secure base for the overall structure while facilitating controlled liquid flow. The outer container unit 102 is supporting the entire weight of the brewing and dispensing unit 104 and the liquid contained within, ensuring structural stability and usability. The outer container unit 102 is housing the connection points for the valve-controlled passage 110, allowing precise regulation of liquid movement within the device. The outer container unit 102 is enabling the integration of a secondary venting channel within the brewing and dispensing unit 104, preventing pressure buildup when dispensing hot liquid. The outer container unit 102 is facilitating the collection of excess liquid when the brewing chamber unit 106 is retracting, ensuring a controlled brewing environment. The outer container unit 102 is forming an integral component in regulating the steeping process by maintaining optimal thermal conditions and structural stability for the device.

The outer container unit 102 is further incorporating a dual-layer vacuum insulation system, ensuring prolonged heat retention while minimizing energy loss during the tea brewing process. The outer container unit 102 is integrating a reinforced structural frame, ensuring resistance against deformation due to temperature fluctuations or external pressure. The outer container unit 102 is designed with a detachable inner lining, allowing effortless cleaning and maintenance without compromising the overall durability of the enclosure. The outer container unit 102 is further incorporating a condensation prevention mechanism, ensuring that external surfaces remain dry even during extended brewing cycles. The outer container unit 102 is including an impact-resistant outer shell, ensuring structural integrity while preventing damage due to accidental drops or external forces. The outer container unit 102 is seamlessly integrating with the brewing and dispensing unit 104 through a guided interlocking mechanism, ensuring effortless assembly and disassembly for enhanced user convenience.

The brewing and dispensing unit 104 is detachably mounted on the outer container unit 102, serving as the primary interface for the tea infusion process. The brewing and dispensing unit 104 is enclosing the brewing chamber unit 106, the timer mechanism unit 108, and the valve-controlled passage 110, ensuring a seamless integration of all functional components. The brewing and dispensing unit 104 is comprising a quick-detach locking system, allowing seamless removal and cleaning of internal components. The brewing and dispensing unit 104 is incorporating a dual-layer insulating structure, reducing external surface temperature and enhancing user safety. The brewing and dispensing unit 104 is further including a secondary venting channel, preventing pressure buildup when dispensing hot liquid. The brewing and dispensing unit 104 is ensuring the controlled movement of the brewing chamber unit 106 during the steeping process by engaging the timer mechanism unit 108. The brewing and dispensing unit 104 is regulating liquid flow between the outer container unit 102 and the drinking outlet unit 112 through the valve-controlled passage 110. The brewing and dispensing unit 104 is designed to house an overflow chamber, collecting excess liquid when the brewing chamber unit 106 is retracting. The brewing and dispensing unit 104 is providing the necessary structural enclosure for the entire tea brewing and dispensing mechanism, ensuring efficient operation and user convenience.

In an embodiment of the present disclosure, the device 100 may include the quick-detach locking mechanism 114. The brewing and dispensing unit 104 may be equipped with a quick-detach locking mechanism 114, allowing users to seamlessly remove internal components for cleaning and maintenance. This quick-detach locking mechanism 114 may employ twist-lock or snap-fit mechanisms for secure attachment and guide interlocking features to ensure proper assembly.

In an embodiment of the present disclosure, the device 100 may include the overflow chamber 116 integrated into the brewing and dispensing unit 104 to collect excess liquid when the brewing chamber unit 106 retracts. The overflow chamber 116 may prevent accidental spillage and direct overflow liquid to a designated reservoir, ensuring a controlled brewing environment.

In an embodiment of the present disclosure, the device 100 may include the dual-layer insulating structure 118 may be capable of reducing heat transfer to external surfaces, enhancing user safety. In an embodiment of the present disclosure, the dual-layer insulating structure 118 may maintain optimal brewing conditions, preventing rapid cooling.

The brewing and dispensing unit 104 is further incorporating an automated infusion control system, ensuring that the steeping process is consistently optimized for various tea types. The brewing and dispensing unit 104 is integrating a self-cleaning mechanism, ensuring that residual tea particles and liquid deposits are removed after each brewing cycle, maintaining hygiene and preventing unwanted flavor carryover. The brewing and dispensing unit 104 is designed with an adjustable flow regulator, allowing users to control the rate at which brewed liquid is dispensed from the device. The brewing and dispensing unit 104 is further including an overfill prevention feature, ensuring that excess liquid does not accumulate within the brewing chamber unit 106, maintaining a controlled brewing environment. The brewing and dispensing unit 104 is incorporating an anti-clogging filtration system, ensuring that fine tea particles do not obstruct the liquid passage, maintaining a smooth and consistent flow throughout the dispensing process.

The brewing chamber unit 106 is positioned within the brewing and dispensing unit 104, facilitating the infusion process by submerging tea leaves or tea bags into the liquid contained within the outer container unit 102. The brewing chamber unit 106 is designed as a perforated strainer unit, allowing controlled infusion while preventing tea leaves from escaping into the liquid. The brewing chamber unit 106 is incorporating an angled bottom surface, ensuring full submersion for uniform steeping. The brewing chamber unit 106 is connected to the timer mechanism unit 108 through a mechanical lifting assembly unit, enabling automated retraction after the predefined brewing duration. The brewing chamber unit 106 is including an internal divider unit, allowing simultaneous steeping of multiple tea types without cross-contamination. The brewing chamber unit 106 is designed to undergo a multi-stage submersion process, allowing incremental exposure of tea leaves to liquid at different intervals to customize infusion strength. The brewing chamber unit 106 is interacting with the valve-controlled passage 110 to regulate liquid flow and prevent premature dilution. The brewing chamber unit 106 is being lifted by the timer mechanism unit 108 upon completion of the steeping process, ensuring accurate infusion and preventing over-steeping.

The brewing chamber unit 106 is further integrating an adjustable infusion depth mechanism, ensuring that tea leaves are submerged to a precise level for optimal flavor extraction. The brewing chamber unit 106 is incorporating a rapid drainage system, ensuring that liquid does not stagnate within the perforated enclosure, preventing over-extraction or bitterness in the brewed tea. The brewing chamber unit 106 is designed with a rotational steeping feature, ensuring that tea leaves are agitated at predefined intervals to enhance infusion efficiency. The brewing chamber unit 106 is further including a heat-retaining enclosure, ensuring that the temperature of the submerged tea leaves remains stable throughout the infusion process. The brewing chamber unit 106 is incorporating a precision-pour spout, ensuring that liquid movement into the valve-controlled passage 110 remains consistent, preventing any turbulence that could disrupt the brewing process.

The timer mechanism unit 108 is operably coupled to the brewing chamber unit 106, controlling the duration of submersion and ensuring precise timing for the tea infusion process. The timer mechanism unit 108 is comprising a mechanical wind-up system unit, enabling precise steeping duration control without requiring an external power source. The timer mechanism unit 108 is incorporating an adjustable dial, allowing users to select a brewing duration between one and thirty minutes. The timer mechanism unit 108 is further including an L-shaped guide unit, ensuring proper alignment and secure engagement of the rotary locking mechanism. The timer mechanism unit 108 is engaging a spring-loaded lifting assembly unit to retract the brewing chamber unit 106 upon completion of the steeping process. The timer mechanism unit 108 is facilitating controlled tea infusion by regulating the duration of tea exposure to liquid, ensuring user preference for tea strength. The timer mechanism unit 108 is further comprising a variable-release mechanism, enabling a controlled delay in lifting the brewing chamber unit 106, providing users with the option to extend brewing time dynamically.

The timer mechanism unit 108 is further integrating an automatic reset function, ensuring that the steeping cycle can be repeated without manual intervention. The timer mechanism unit 108 is incorporating a multi-stage brewing setting, allowing users to program different infusion times for varying tea strengths. The timer mechanism unit 108 is designed with a noise-free mechanical operation, ensuring that the activation and deactivation of the brewing cycle occur silently, preventing disruptions in quiet environments. The timer mechanism unit 108 is further including a built-in safety lock, ensuring that the brewing chamber unit 106 remains securely positioned until the steeping cycle is completed. The timer mechanism unit 108 is incorporating a gradual lift mechanism, ensuring that tea leaves are retracted smoothly to prevent sudden liquid displacement or uneven flavor extraction.

The valve-controlled passage 110 is positioned between the outer container unit 102 and the brewing and dispensing unit 104, allowing selective liquid flow regulation. The valve-controlled passage 110 is ensuring controlled movement of liquid between the brewing chamber unit 106 and the outer container unit 102, preventing premature dilution or overflow. The valve-controlled passage 110 is designed to maintain a sealed environment, preventing unwanted leakage when the brewing chamber unit 106 is submerged. The valve-controlled passage 110 is supporting the functionality of the drinking outlet unit 112 by controlling the release of brewed tea upon user activation.

The valve-controlled passage 110 is further integrating a dual-seal protection system, ensuring that liquid flow remains controlled while preventing air infiltration that could impact the brewing temperature. The valve-controlled passage 110 is incorporating an anti-clogging filtration mesh, ensuring that fine tea particles do not obstruct liquid movement. The valve-controlled passage 110 is designed with a pressure-responsive opening, ensuring that liquid is dispensed only when necessary, preventing unintended leaks. The valve-controlled passage 110 is further including an integrated cleaning channel, ensuring that residual liquid and debris are flushed out after each brewing cycle, maintaining hygiene. The valve-controlled passage 110 is incorporating a flow stabilization system, ensuring that liquid movement remains consistent without sudden pressure fluctuations.

The drinking outlet unit 112 is positioned at the top of the brewing and dispensing unit 104, enabling the controlled dispensing of brewed tea. The drinking outlet unit 112 is comprising an anti-drip mechanism, preventing leakage when the device is tilted or transported. The drinking outlet unit 112 is incorporating a closure mechanism, allowing users to selectively open and close the passage for dispensing brewed tea. The drinking outlet unit 112 is designed to ensure smooth liquid flow while maintaining hygiene and ease of use. The drinking outlet unit 112 is interacting with the valve-controlled passage 110 to regulate the final release of brewed tea, ensuring efficient dispensing without spillage.

The drinking outlet unit 112 is further integrating a spill-resistant dispensing mechanism, ensuring that liquid is released in a controlled manner without splashing. The drinking outlet unit 112 is incorporating a heat-resistant outer surface, ensuring that users can handle the dispensing section without the risk of burns. The drinking outlet unit 112 is designed with a precision-flow nozzle, ensuring that liquid movement remains smooth and uninterrupted. The drinking outlet unit 112 is further including an automatic closure system, ensuring that the outlet remains sealed when not in use, preventing contamination. The drinking outlet unit 112 is incorporating an ergonomic angle adjustment, ensuring that liquid is dispensed at an optimal trajectory for different container types.

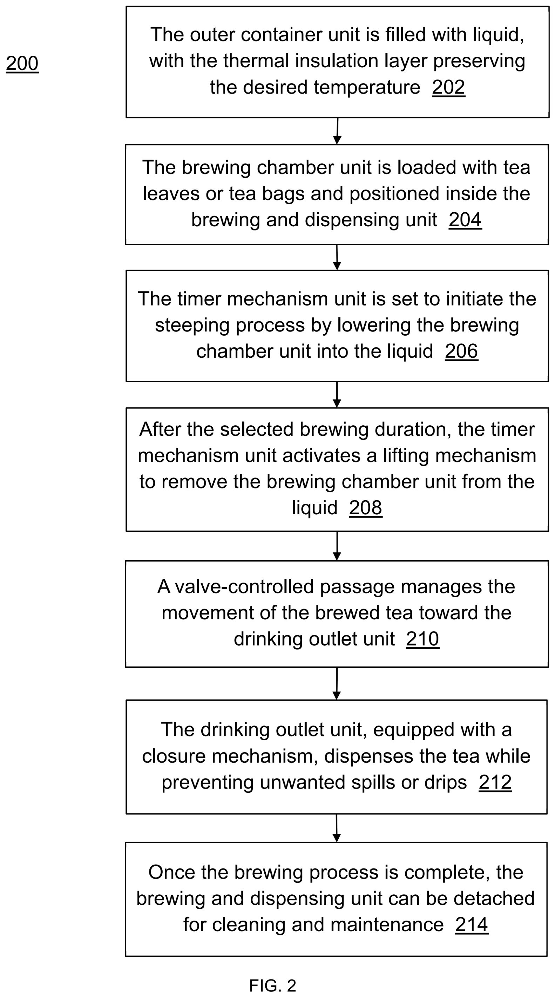

FIG. 2 illustrates a flowchart of an automated tea brewing and dispensing device, according to embodiments of the present invention disclosed herein.

At 202, the outer container unit is filled with liquid, with the thermal insulation layer preserving the desired temperature.

At 204, the brewing chamber unit is loaded with tea leaves or tea bags and positioned inside the brewing and dispensing unit.

At 206, the timer mechanism unit is set to initiate the steeping process by lowering the brewing chamber unit into the liquid.

At 208, after the selected brewing duration, the timer mechanism unit activates a lifting mechanism to remove the brewing chamber unit from the liquid.

At 210, a valve-controlled passage manages the movement of the brewed tea toward the drinking outlet unit.

At 212, the drinking outlet unit, equipped with a closure mechanism, dispenses the tea while preventing unwanted spills or drips.

At 214, once the brewing process is complete, the brewing and dispensing unit can be detached for cleaning and maintenance.

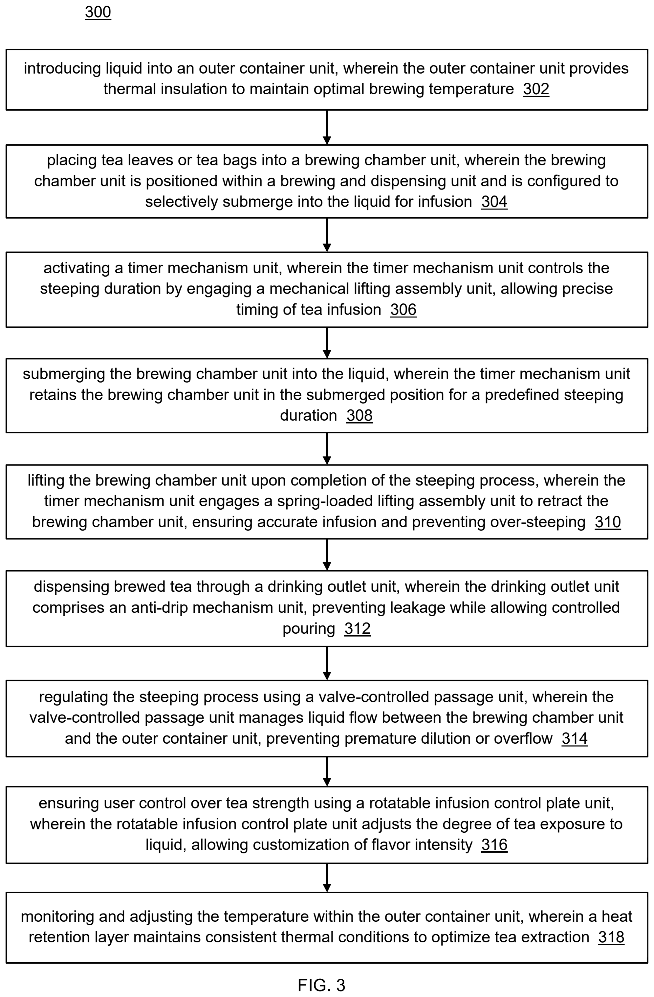

FIG. 3 illustrates a flowchart of an automated tea brewing and dispensing method, according to embodiments of the present invention disclosed herein.

At 302, introducing liquid into an outer container unit, wherein the outer container unit provides thermal insulation to maintain optimal brewing temperature.

At 304, placing tea leaves or tea bags into a brewing chamber unit, wherein the brewing chamber unit is positioned within a brewing and dispensing unit and is configured to selectively submerge into the liquid for infusion.

At 306, activating a timer mechanism unit, wherein the timer mechanism unit controls the steeping duration by engaging a mechanical lifting assembly unit, allowing precise timing of tea infusion.

At 308, submerging the brewing chamber unit into the liquid, wherein the timer mechanism unit retains the brewing chamber unit in the submerged position for a predefined steeping duration.

At 310, lifting the brewing chamber unit upon completion of the steeping process, wherein the timer mechanism unit engages a spring-loaded lifting assembly unit to retract the brewing chamber unit, ensuring accurate infusion and preventing over-steeping.

At 312, dispensing brewed tea through a drinking outlet unit, wherein the drinking outlet unit comprises an anti-drip mechanism unit, preventing leakage while allowing controlled pouring.

At 314, regulating the steeping process using a valve-controlled passage unit, wherein the valve-controlled passage unit manages liquid flow between the brewing chamber unit and the outer container unit, preventing premature dilution or overflow.

At 316, ensuring user control over tea strength using a rotatable infusion control plate unit, wherein the rotatable infusion control plate unit adjusts the degree of tea exposure to liquid, allowing customization of flavor intensity.

In an embodiment of the present disclosure, the device 100 may include the rotatable infusion control plate unit 112 that may allow the users to adjust tea strength manually by modifying tea exposure to liquid. The rotatable infusion control plate unit 112 may adjust the infusion rate dynamically, preventing over-extraction. The rotatable infusion control plate unit 112 may feature a precision control knob, allowing users to finely tune the infusion level.

At 318, monitoring and adjusting the temperature within the outer container unit, wherein a heat retention layer maintains consistent thermal conditions to optimize tea extraction.

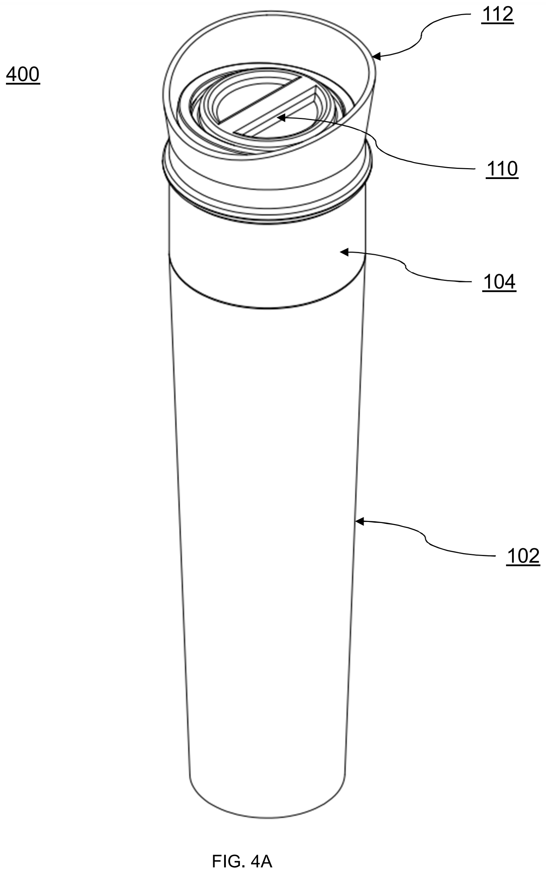

FIG. 4A-4D illustrate different views of the automated tea brewing and dispensing device, according to embodiments of the present invention disclosed herein.

FIG. 4A illustrates an assembly model view of the automated tea brewing and dispensing device, according to embodiments of the present invention disclosed herein.

The outer container unit 102 is forming the main body, extending vertically. The brewing and dispensing unit 104 is positioned at the upper portion of the outer container unit 102, ensuring secure placement. The valve-controlled passage 110 is located at the top, facilitating controlled flow. The drinking outlet unit 112 is positioned above the valve-controlled passage 110, allowing dispensing of the brewed tea.

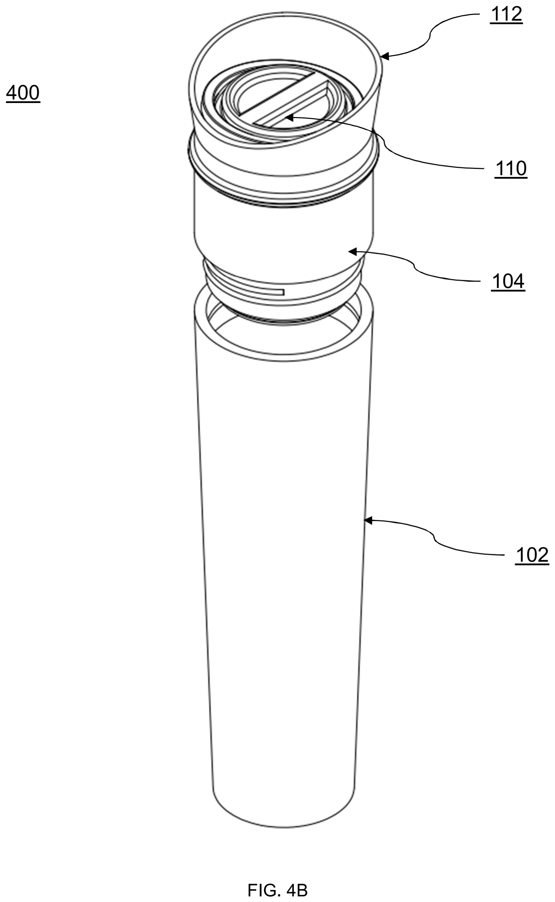

FIG. 4B illustrates an exploded assembly model view of the automated tea brewing and dispensing device, according to embodiments of the present invention disclosed herein.

The outer container unit 102 is positioned at the bottom, forming the base structure. The brewing and dispensing unit 104 is separated from the outer container unit 102, showing its detachable configuration. The valve-controlled passage 110 is located at the upper portion of the brewing and dispensing unit 104, ensuring controlled liquid flow. The drinking outlet unit 112 is positioned above the valve-controlled passage 110, facilitating dispensing. The brewing chamber unit 106 and the timer mechanism unit 108 are enclosed within the brewing and dispensing unit 104, regulating the brewing process. The exploded assembly model view demonstrates the relative arrangement and interconnection of all components, highlighting their structural alignment within the automated tea brewing and dispensing device.

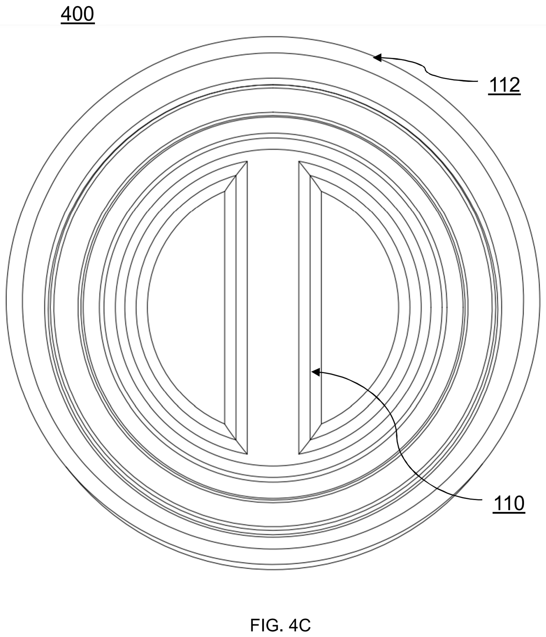

FIG. 4C illustrates a top model view of the automated tea brewing and dispensing device, according to embodiments of the present invention disclosed herein.

The drinking outlet unit 112 is forming the outermost circular structure, enclosing the valve-controlled passage 110. The valve-controlled passage 110 is positioned centrally within the drinking outlet unit 112, forming an outlet mechanism for controlled liquid dispensing. The circular arrangement of the drinking outlet unit 112 and the valve-controlled passage 110 is ensuring structural integrity and operational efficiency in the automated tea brewing and dispensing device. The brewing and dispensing unit 104, the brewing chamber unit 106, the timer mechanism unit 108, and the outer container unit 102 are positioned beneath the drinking outlet unit 112 and the valve-controlled passage 110, forming an enclosed configuration within the automated tea brewing and dispensing device.

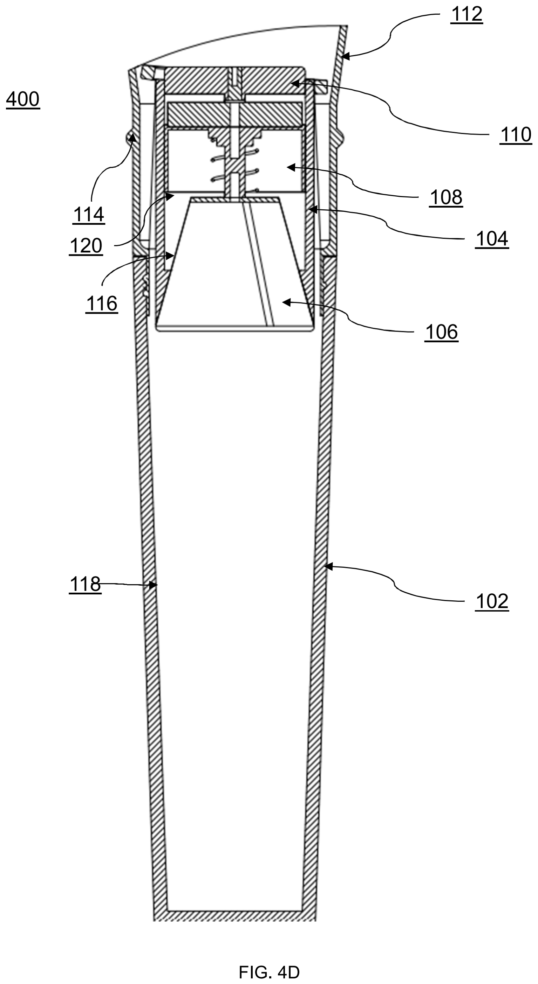

FIG. 4D illustrates a top model view of the automated tea brewing and dispensing device, according to embodiments of the present invention disclosed herein.

The outer container unit 102 is forming the main structural enclosure, extending vertically to support the internal components. The brewing and dispensing unit 104 is positioned within the upper section of the outer container unit 102, enclosing the brewing chamber unit 106. The brewing chamber unit 106 is forming an internal compartment where tea brewing is taking place. The timer mechanism unit 108 is positioned adjacent to the brewing chamber unit 106, regulating the operation of the valve-controlled passage 110. The valve-controlled passage 110 is controlling the flow of liquid from the brewing chamber unit 106 to the drinking outlet unit 112. The drinking outlet unit 112 is positioned at the top, facilitating the dispensing of brewed tea.

While the invention has been described in connection with what is presently considered to be the most practical and various embodiments, it will be understood that the invention is not to be limited to the disclosed embodiments, but on the contrary, is intended to cover various modifications and equivalent arrangements included within the scope of the appended claims.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical software, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the software or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An automated tea brewing and dispensing device (100), comprising:
• an outer container unit (102) configured to hold liquid and enclose internal components, the outer container unit (102) comprising a thermal insulation layer to maintain the temperature of the liquid;
• a brewing and dispensing unit (104) detachably mounted on the outer container unit (102), the brewing and dispensing unit (104) comprising:
• a brewing chamber unit (106), positioned within the brewing and dispensing unit (104), the brewing chamber unit (106) configured to receive tea leaves or tea bags and selectively submerge them into the liquid;
• a timer mechanism unit (108), operably coupled to the brewing chamber unit (106), the timer mechanism unit (108) configured to control the submersion duration and automatically lift the brewing chamber unit (106) upon completion of the steeping process;
• a valve-controlled passage (110), allowing selective liquid flow regulation between the outer container unit (102) and the drinking outlet unit (112);
• a drinking outlet unit (112), positioned at the top of the brewing and dispensing unit (104), the drinking outlet unit (112) including a closure mechanism to selectively open and close the passage for dispensing brewed tea.

2. The device (100) of claim 1, wherein the brewing chamber unit (106) is a perforated strainer unit, facilitating controlled infusion while preventing tea leaves from escaping into the liquid.

3. The device (100) of claim 1 or 2, wherein the brewing chamber unit (106) is connected to the timer mechanism unit (108) through a mechanical lifting assembly unit, allowing automated retraction of the brewing chamber unit (106) after the predefined brewing time.

4. The device (100) of any of claims 1 to 3, wherein the timer mechanism unit (108) comprises a mechanical wind-up system unit, enabling precise steeping duration control without requiring an external power source.

5. The device (100) of any of claims 1 to 4, wherein the timer mechanism unit (108) includes an adjustable dial, allowing users to select a brewing duration between 1 and 30 minutes.

6. The device (100) of any of claims 1 to 5, wherein the timer mechanism unit (108) incorporates an L-shaped guide unit, ensuring proper alignment and secure engagement of the rotary locking mechanism.

7. The device (100) of any of claims 1 to 6, wherein the timer mechanism unit (108) further includes a spring-loaded lifting assembly, configured to retract the brewing chamber unit (106) upon completion of the steeping process.

8. The device (100) of any of claims 1 to 7, wherein the drinking outlet unit (112) comprises an anti-drip mechanism, preventing leakage when the device (100) is tilted or transported.

9. The device (100) of any of claims 1 to 8, wherein the brewing and dispensing unit (104) further includes an overflow chamber, configured to collect excess liquid when the brewing chamber unit (106) is retracted.

10. The device (100) of any of claims 1 to 9, wherein the outer container unit (102) comprises a heat retention layer, ensuring consistent brewing temperature throughout the steeping process.

11. The device (100) of any of claims 1 to 10, wherein the brewing chamber unit (106) is designed with an angled bottom surface, ensuring full submersion for uniform steeping.

12. The device (100) of any of claims 1 to 11, wherein the brewing chamber unit (106) includes an internal divider unit, allowing simultaneous steeping of multiple tea types without cross-contamination.

13. The device (100) of any of claims 1 to 12, wherein the brewing and dispensing unit (104) includes a secondary venting channel, preventing pressure buildup when hot liquid is being dispensed.

14. The device (100) of any of claims 1 to 13, wherein the brewing and dispensing unit (104) comprises a quick-detach locking system, allowing seamless removal and cleaning of internal components.

15. The device (100) of any of claims 1 to 14, wherein the brewing and dispensing unit (104) comprises a dual-layer insulating structure, reducing external surface temperature and enhancing user safety.

16. The device (100) of any of claims 1 to 15, wherein the brewing chamber unit (106) includes a rotatable infusion control plate unit, allowing users to manually adjust the strength of the tea infusion.

17. An automated tea brewing and dispensing method, comprising:
• introducing liquid into an outer container unit (102), wherein the outer container unit (102) provides thermal insulation to maintain optimal brewing temperature;
• placing tea leaves or tea bags into a brewing chamber unit (106), wherein the brewing chamber unit (106) is positioned within a brewing and dispensing unit (104) and is configured to selectively submerge into the liquid for infusion;
• activating a timer mechanism unit (108), wherein the timer mechanism unit (108) controls the steeping duration by engaging a mechanical lifting assembly unit, allowing precise timing of tea infusion;
• submerging the brewing chamber unit (106) into the liquid, wherein the timer mechanism unit (108) retains the brewing chamber unit (106) in the submerged position for a predefined steeping duration;
• lifting the brewing chamber unit (106) upon completion of the steeping process, wherein the timer mechanism unit (108) engages a spring-loaded lifting assembly unit to retract the brewing chamber unit (106), ensuring accurate infusion and preventing over-steeping;
• dispensing brewed tea through a drinking outlet unit (112), wherein the drinking outlet unit (112) comprises an anti-drip mechanism unit, preventing leakage while allowing controlled pouring;
• regulating the steeping process using a valve-controlled passage unit (110), wherein the valve-controlled passage unit (110) manages liquid flow between the brewing chamber unit (106) and the outer container unit (102), preventing premature dilution or overflow;
• ensuring user control over tea strength using a rotatable infusion control plate unit, wherein the rotatable infusion control plate unit adjusts the degree of tea exposure to liquid, allowing customization of flavor intensity;
• monitoring and adjusting the temperature within the outer container unit (102), wherein a heat retention layer maintains consistent thermal conditions to optimize tea extraction.

18. The method of claim 17, wherein the brewing chamber unit (106) is configured to undergo a multi-stage submersion process, allowing incremental exposure of tea leaves to liquid at different intervals to customize infusion strength.

19. The method of claim 17 or 18, wherein the timer mechanism unit (108) comprises a variable-release mechanism, enabling a controlled delay in lifting the brewing chamber unit (106), providing users with the option to extend brewing time dynamically.

20. The method of any of claims 17 to 19, wherein the brewing chamber unit (106) has an angled bottom surface, ensuring full submersion for uniform steeping.

21. The method of any of claims 17 to 20, wherein the brewing chamber unit (106) includes an internal divider unit, allowing simultaneous steeping of multiple tea types without cross-contamination.

22. The method of any of claims 17 to 21, wherein the brewing and dispensing unit (104) includes a secondary venting channel, preventing pressure buildup when dispensing hot liquid.
